# EUROPÄISCHE PATENTANMELDUNG

(11) **EP 4 841 100 A1**
(43) Veröffentlichungstag der Anmeldung: **18.11.2026**
(21) Anmeldenummer: 25175929.6
(22) Anmeldetag: 13.05.2025
(51) Int. Cl.: F03D 1/06

(54) **GURT FÜR EIN ROTORBLATT UND ROTORBLATT SOWIE VERFAHREN ZUM HERSTELLEN EINES GURTS**

(71) Anmelder: Wobben Properties GmbH, 26607 Aurich (DE)
(72) Erfinder: Bärtl, Christina, 26603 Aurich (DE)
(74) Vertreter: Eisenführ Speiser

(57) **Zusammenfassung**

Die Erfindung betrifft einen Gurt (281, 282), insbesondere für ein Rotorblatt (200) einer Windenergieanlage (100), Ferner betrifft die Erfindung ein Rotorblatt (200) für eine Windenergieanlage und ein Verfahren (300) zum Herstellen eines Gurts. Der Gurt (281, 282), insbesondere für ein Rotorblatt (200) einer Windenergieanlage (100), umfasst: mehrere pultrudierte erste Faserverbundstreifen (283a-h), die jeweils eine Längsrichtung (L1) aufweisen, wobei die Längsrichtungen (L1) der ersten Faserverbundstreifen (283a-h) parallel zueinander ausgerichtet sind, wobei die ersten Faserverbundstreifen (283a-h) jeweils einen rechteckigen Querschnitt aufweisen, und mindestens einen zweiten Faserverbundstreifen (284a-g), der eine Längsrichtung (L2) aufweist, die parallel zu den Längsrichtungen (L1) der ersten Faserverbundstreifen (283a-h) ausgerichtet ist, dadurch gekennzeichnet, dass der mindestens eine zweite Faserverbundstreifen (284a-g) einen nicht-rechteckigen keilförmigen oder trapezförmigen Querschnitt aufweist.

## Beschreibung

Die Erfindung betrifft einen Gurt, insbesondere für ein Rotorblatt einer Windenergieanlage, Ferner betrifft die Erfindung ein Rotorblatt für eine Windenergieanlage und ein Verfahren zum Herstellen eines Gurts.

Rotorblätter für Windenergieanlagen werden typischerweise aus mehreren Bauteilen zusammengebaut. So weisen Rotorblätter in der Regel zwei Rotorblatthalbschalen auf, wobei entlang jeder der Rotorblatthalbschalen in Längsrichtung jeweils mindestens ein Gurt verläuft. An den Rändern der Rotorblatthalbschalen sind diese typischerweise miteinander verklebt. Die Gurte sind im Innenraum des Rotorblattes und sich gegenüberliegend angeordnet. Die Gurte sind ferner in der Regel mit einem Steg miteinander verbunden. Es sind allerdings auch andere Aufbauten von Rotorblättern bekannt.

Es ist bekannt, pultrudierte Faserverbundstreifen, die auch als Pultrudate bezeichnet werden können, für die Herstellung von Gurten von Rotorblättern für Windenergieanlagen zu verwenden. Pultrudierte Faserverbundstreifen sind im Pultrusionsverfahren, das auch als Strangziehverfahren bezeichnet werden kann, hergestellte Faserverbund-Bauteile. Pultrudierte Faserverbundstreifen bieten den Vorteil, dass diese schnell, einfach und kostengünstig hergestellt werden können. Wenn pultrudierte Faserverbundwerkstoffe in einem Gurt eines Rotorblattes verwendet werden, werden diese typischerweise in eine Form gelegt und, gegebenenfalls mit weiteren Bauteilen oder Bestandteilen, in einem Harzinfusionsverfahren mit Harz umgeben, wodurch die pultrudierten Faserverbundwerkstoffe zu einem Faserverbundbauteil miteinander verbunden werden.

Die Gurte für die Rotorblätter können vorab in separaten Formen hergestellt werden. Anschließend können solche separat hergestellten Gurte dann in einem zweiten Schritt mit den Rotorblatthalbschalen, und gegebenenfalls Stegen, verbunden werden. Es ist allerdings auch möglich, die Gurte und Rotorblatthalbschalen in einem gemeinsamen Harzinfusionsprozess herzustellen.

Beim Einlegen von pultrudierten Faserverbundwerkstoffen in eine Form vor der Durchführung eines Harzinfusionsverfahrens kann es vorkommen, dass die pultrudierten Faserverbundwerkstoffe eine V-förmige Kontur ausbilden, wobei der Gurt im Querschnitt V-förmig geformt ist. Eine solche V-förmige Kontur kann sich insbesondere deshalb ausbilden, weil die verwendeten Formen gekrümmte Auflageflächen aufweisen, um den Gurt auf der Seite, auf der der Gurt mit der Rotorblatthalbschale verbunden werden soll, an die Form der Rotorblatthalbschale anzupassen. Eine solche V-förmige Kontur mit einer nicht ebenen Fläche des Gurtes auf der Gurtinnenseite des Gurtes kann den späteren Materialverbund schwächen und/oder das Verkleben mit einem weiteren Bauteil, welches mit dem Gurt verbunden werden soll, wie etwa einem Steg, erschweren. Somit kann sich eine solche V-förmige Kontur negativ auf die mechanischen Eigenschaften des Rotorblatts auswirken.

Beim Einlegen von pultrudierten Faserverbundwerkstoffen in eine Form vor der Durchführung eines Harzinfusionsverfahrens können außerdem unerwünschte Hohlräume, insbesondere zwischen der Form und den pultrudierten Faserverbundwerkstoffen, entstehen. Aufgrund solcher Hohlräume können unerwünschte harzreiche Bereiche im Gurt entstehen, die sich negativ auf die mechanischen Eigenschaften des Gurts und damit auch negativ auf die mechanischen Eigenschaften des Rotorblatts auswirken können.

Der Erfindung liegt daher die Aufgabe zugrunde, eine verbesserte Lösung bereitzustellen, welche die genannten Probleme adressiert. Insbesondere ist es Aufgabe der Erfindung, eine Lösung bereitzustellen, mit der die mechanischen Eigenschaften eines Gurtes, und insbesondere eines Rotorblattes, verbessert werden können.

Gemäß einem ersten Aspekt wird die Aufgabe gelöst durch einen Gurt mit den Merkmalen des Anspruchs 1. Danach ist ein Gurt, insbesondere für ein Rotorblatt einer Windenergieanlage, vorgesehen, der umfasst: mehrere pultrudierte erste Faserverbundstreifen, die jeweils eine Längsrichtung aufweisen, wobei die Längsrichtungen der ersten Faserverbundstreifen parallel zueinander ausgerichtet sind, wobei die ersten Faserverbundstreifen jeweils einen rechteckigen Querschnitt aufweisen, und mindestens einen zweiten Faserverbundstreifen, der eine Längsrichtung aufweist, die parallel zu den Längsrichtungen der ersten Faserverbundstreifen ausgerichtet ist, wobei der mindestens eine zweite Faserverbundstreifen einen nicht-rechteckigen keilförmigen oder trapezförmigen Querschnitt aufweist. Es wird also ein Gurt vorgeschlagen, der mehrere pultrudierte Faserverbundstreifen mit rechteckigem Querschnitt und mindestens einen Faserverbundstreifen mit nicht-rechteckigem keilförmigem oder trapezförmigen Querschnitt aufweist.

Durch eine solche Kombination von mehreren pultrudierten Faserverbundstreifen mit einem rechteckigen Querschnitt und mindestens einem Faserverbundstreifen mit nicht-rechteckigem keilförmigen oder trapezförmigen Querschnitt kann auf besonders vorteilhafte Weise erreicht werden, dass eine V-förmige Kontur des Gurtes mit einer nicht ebenen Fläche des Gurtes auf der Gurtinnenseite des Gurtes vermieden wird. Dadurch kann eine Schwächung des Materialverbunds und/oder eine Schwächung einer Verklebung mit einem weiteren Bauteil, welches mit dem Gurt verbunden werden soll, wie etwa einem Steg, zuverlässig vermieden werden, sodass die mechanischen Eigenschaften des Gurtes und somit des Rotorblattes verbessert werden können.

Durch eine solche Kombination von mehreren pultrudierten Faserverbundstreifen mit rechteckigem Querschnitt und mindestens einem Faserverbundstreifen mit nicht-rechteckigem keilförmigem oder trapezförmigem Querschnitt kann außerdem auf besonders vorteilhafte Weise erreicht werden, dass Hohlräume zwischen der Form und den Faserverbundstreifen reduziert oder ganz vermieden werden, wodurch harzreiche Bereiche reduziert oder ganz vermieden werden können.

Unter pultrudierten Faserverbundstreifen sind insbesondere Bauteile oder Halbzeuge aus einem Faser-Kunststoff-Verbund, die in einem Pultrusionsverfahren, das auch als Strangziehverfahren bezeichnet werden kann, hergestellt wurden. Beim Pultrusionsverfahren werden typischerweise trockene Fasern, die in der Regel in Rovings, also Faserbündel, und/oder Faserhalbzeugen bereitgestellt werden, durch ein Harzbad gezogen und auf diese Weise mit Harz imprägniert. Es sind aber auch Pultrusionsverfahren bekannt, bei denen Prepregs, also bereits vorimprägnierte Faserhalbzeuge, als Ausgangsmaterial des Pultrusionsprozesses verwendet werden. Vorzugsweise werden im Pultrusionsverfahren die Faserverbundstreifen zumindest teilweise, bevorzugt vollständig, ausgehärtet, sodass die pultrudierten Faserverbundstreifen eine zumindest teilweise, bevorzugt vollständig, ausgehärtete Kunststoffmatrix aufweisen.

Pultrudierte Faserverbundstreifen können auch als Pultrudate bezeichnet werden. Pultrudierte Faserverbundstreifen weisen vorzugsweise jeweils eine Längserstreckung auf, die um ein Vielfaches größer ist als ihre Quererstreckung. Die Längserstreckung erstreckt sich in Richtung der Längsrichtung der pultrudierten Faserverbundstreifen, was der Richtung entspricht, in der die pultrudierten Faserverbundstreifen im Pultrusionsverfahren gezogen wurden. Vorzugsweise sind die ersten Faserverbundstreifen in dem Gurt derart angeordnet, dass sich diese entlang Ihrer Längsrichtungen parallel zueinander erstrecken. Die ersten Faserverbundstreifen weisen einen rechteckigen Querschnitt auf.

Der Gurt umfasst außerdem mindestens einen zweiten Faserverbundstreifen. Vorzugsweise weist der mindestens eine zweite Faserverbundstreifen eine Längserstreckung auf, die um ein Vielfaches größer ist als ihre Quererstreckung. Die Längserstreckung erstreckt sich in Richtung der Längsrichtung des mindestens einen zweiten Faserverbundstreifens. Sofern mehrere zweite Faserverbundstreifen vorhanden sind, sind diese vorzugsweise in dem Gurt derart angeordnet, dass sich diese entlang Ihrer Längsrichtungen parallel zueinander erstrecken. Der mindestens eine zweite Faserverbundstreifen weist einen keilförmigen oder trapezförmigen Querschnitt auf.

Der mindestens eine zweite Faserverbundstreifen weist einen nicht-rechteckigen Querschnitt auf. Der zweite Faserverbundstreifen weist entweder einen nicht-rechteckigen keilförmigen Querschnitt oder einen nicht-rechteckigen trapezförmigen Querschnitt auf.

Unter einem keilförmigen Querschnitt ist insbesondere ein Querschnitt zu verstehen, der die Form eines Keils aufweist, wobei zwei Seitenflächen des mindestens einen zweiten Faserverbundstreifens unter einem spitzen Winkel, also einem Winkel von weniger als 90°, zusammenlaufen.

Mittels eines solchen keilförmigen Querschnitts kann auf besonders vorteilhafte Weise eine V-förmige Ausbildung des Gurtes auf der Inneren Seite des Gurtes verringert oder ganz vermieden werden.

Der keilförmige Querschnitt muss nicht exakt die Querschnittsform eines Keils aufweisen, sondern kann insbesondere am spitzwinkligen Ende abgerundet und/oder stumpf sein. Der keilförmige Querschnitt kann entlang seiner Kontur Stufen aufweisen oder auch ohne Stufen ausgebildet sein.

Unter einem trapezförmigen Querschnitt ist insbesondere ein Querschnitt zu verstehen, der die Form eines nicht-rechteckigen Trapezes aufweist, wobei zwei gegenüberliegende Seiten im Wesentlichen parallel zueinander angeordnet sind und zwei weitere gegenüberliegende Seiten nicht parallel zueinander angeordnet sind. Die zwei gegenüberliegenden Seiten, die nicht parallel zueinander angeordnet sind, bilden eine Verjüngung des Querschnitts zu einer Seite hin, ähnlich wie bei einem keilförmigen Querschnitt. Vorzugsweise ist der trapezförmige Querschnitt in Form eines rechtwinkligen Trapezes mit genau zwei rechten Winkeln ausgebildet.

Gemäß einer bevorzugten Ausführungsform ist vorgesehen, dass der Gurt einen einzigen zweiten Faserverbundstreifen aufweist. Wenn nur genau ein zweiter Faserverbundstreifen je Gurt verwendet wird, kann der Aufwand für die Herstellung der zweiten Faserverbundstreifen auf vorteilhafte Weise reduziert werden.

Es ist besonders bevorzugt, dass der Gurt mindestens zwei zweite Faserverbundstreifen umfasst, die jeweils einen nicht-rechteckigen keilförmigen oder trapezförmigen Querschnitt aufweisen und die jeweils eine Längsrichtung aufweisen, die parallel zu den Längsrichtungen der ersten Faserverbundstreifen ausgerichtet sind.

Mit mindestens zwei nicht-rechteckigen keilförmigen oder trapezförmigen zweiten Faserverbundstreifen kann auf besonders vorteilhafte Weise erreicht werden, dass eine V-förmige Kontur des Gurtes, insbesondere eine nicht ebene Innenfläche des Gurtes, vermieden wird, denn dann können zwei nicht-rechteckige keilförmige oder trapezförmige zweite Faserverbundsteifen nebeneinander angeordnet werden und somit ein größerer Krümmungsbereich ausgeglichen werden.

Vorzugsweise umfasst der Gurt genau zwei zweite Faserverbundstreifen. Mit genau zwei nicht-rechteckigen keilförmigen oder trapezförmigen zweiten Faserverbundstreifen kann erreicht werden, dass erstens eine V-förmige Kontur des Gurtes, insbesondere eine nicht ebene Innenfläche des Gurtes, vermieden wird, zweitens harzreiche Bereiche reduziert werden und drittens der Herstellungsaufwand für die Herstellung von keilförmigen oder trapezförmigen Faserverbundstreifen so gering wie möglich gehalten wird, indem nur zwei - und nicht mehr als zwei - solcher keilförmigen oder trapezförmigen Faserverbundstreifen verwendet werden.

Vorzugsweise sind zwei der mindestens zwei zweiten Faserverbundstreifen nebeneinander angeordnet. Es ist besonders bevorzugt, dass zwei der mindestens zwei zweiten Faserverbundstreifen auf der Seite des Gurtes angeordnet sind, die ausgebildet ist, um mit einer Rotorblatthalbschale eines Rotorblattes verbunden zu werden.

Es ist besonders bevorzugt, dass der mindestens eine zweite Faserverbundstreifen ein pultrudierter Faserverbundstreifen oder ein in einem Vakuuminfusionsverfahren hergestellter Faserverbundstreifen ist.

Ein Vorteil mindestens eines pultrudierten zweiten Faserverbundstreifen liegt darin, dass der zweite Faserverbundstreifen im Pultrusionsverfahren besonders kostengünstig hergestellt werden kann. Außerdem kann im Pultrusionsverfahren eine besonders gut reproduzierbare Bauteilqualität erreicht werden.

Es ist aber auch denkbar, dass der mindestens eine zweite Faserverbundstreifen auf eine andere Weise hergestellt wird, beispielsweis in einem Vakuuminfusionsverfahren.

Es ist besonders bevorzugt, dass der mindestens eine zweite Faserverbundstreifen derart angeordnet ist, dass sich die Höhe des mindestens einen zweiten Faserverbundstreifens von einer Gurtmitte des Gurts zu einer Gurtseite des Gurts hin verringert, wobei vorzugsweise die maximale Höhe des mindestens einen zweiten Faserverbundstreifens im Bereich der Gurtmitte des Gurts angeordnet ist und/oder wobei vorzugsweise die minimale Höhe des mindestens einen zweiten Faserverbundstreifens im Bereich der Gurtseite des Gurts angeordnet ist.

Vorzugsweise ist der mindestens eine zweite Faserverbundstreifen derart angeordnet, dass die einen spitzen Winkel bildenden Seitenflächen des zweiten Faserverbundstreifens in Richtung einer der Gurtseiten des Gurts zusammenlaufen. Im Querschnitt nimmt demnach die Höhe des zweiten Faserverbundstreifens in Richtung einer Seite des Gurts ab.

Unter Gurtseiten sind dabei insbesondere die zwei Seiten des Gurts zu verstehen, die, wenn man den Querschnitt des Gurts betrachtet, jeweils die seitlichen Außenkonturabschnitte des Gurts bilden, die zwischen der Gurtinnenseite und der Gurtaußenseite verlaufen.

Es ist besonders bevorzugt, dass der Gurt eine Gurtaußenseite, die ausgebildet ist, um mit einer Rotorblattschale verbunden zu werden, umfasst, wobei die Gurtaußenseite eine gewölbt ausgebildete Außenoberfläche, insbesondere quer zur Längsrichtung des Gurts gewölbt ausgebildete Außenoberfläche, aufweist.

Vorzugsweise entspricht die Wölbung der Außenoberfläche der Gurtaußenseite einer Wölbung der Rotorblattschaleninnenfläche, mit der der Gurt verbunden wird oder ist.

Es ist besonders bevorzugt, dass der Gurt eine Gurtinnenseite, die ausgebildet ist, um mit mindestens einem Steg verbunden zu werden, umfasst, wobei die Gurtinnenseite eine ebene, und insbesondere nicht gewölbte, Außenoberfläche, insbesondere quer zur Längsrichtung des Gurts eben ausgebildete Außenoberfläche, aufweist.

Mittels einer solchen ebenen, und insbesondere nicht gewölbten Außenoberfläche der Gurtinnenseite kann eine Schwächung des Materialverbunds und insbesondere eine Schwächung einer Verklebung der Gurtinnenseite mit einem Steg vermieden werden. Durch die ebene Außenoberfläche der Gurtinnenseite kann vielmehr eine besonders zuverlässige Verklebung zwischen dem Gurt und einem Steg erreicht werden.

Es ist besonders bevorzugt, dass die Faserverbundstreifen, umfassend die ersten Faserverbundstreifen und den mindestens einen zweiten Faserverbundstreifen, in mindestens zwei Stapeln nebeneinander angeordnet sind.

Vorzugsweise sind die Faserverbundstreifen gestapelt angeordnet, wobei vorzugsweise mehrere Stapel nebeneinander angeordnet sind. Die Stapel können dabei derart angeordnet sein, dass die Faserverbundstreifen genau übereinandergestapelt werden oder aber die Faserverbundstreifen mauerwerkartig versetzt und/oder überlappend übereinandergestapelt werden.

Vorzugsweise weist jeder der Stapel mindestens einen zweiten Faserverbundstreifen auf, wobei besonders bevorzugt die zweiten Faserverbundstreifen bezogen auf die Höhe der Stapel in gleicher Höhe angeordnet sind und/oder spiegelsymmetrisch zueinander angeordnet sind.

Es ist bevorzugt für jeden Stapel mindestens einen keilförmigen oder trapezförmigen Faserverbundstreifen vorzusehen, da dann im Bereich jedes Stapels die Krümmung der Form bzw. der Gurtaußenseite so ausgeglichen werden kann, dass eine möglichst ebene Gurtinnenseite realisiert werden kann.

Es ist besonders bevorzugt, dass die ersten Faserverbundstreifen Kohlenstofffasern umfassen und/oder die Kohlenstofffasern unidirektional ausgerichtet sind, wobei vorzugsweise alle Kohlenstofffasern der ersten Faserverbundstreifen parallel zur Längsrichtung des Gurts ausgerichtet sind.

Kohlenstofffasern weisen den Vorteil auf, dass diese im Vergleich zu anderen Faserarten eine besonders hohe spezifische Festigkeit und eine besonders hohe spezifische Steifigkeit aufweisen. Es ist aber auch denkbar, dass alternativ oder ergänzend zu Kohlenstofffasern Glasfasern oder andere Faserarten eingesetzt werden.

Vorzugsweise ist ein Großteil oder sind alle der Fasern der ersten Faserverbundstreifen in der Längsrichtung des ersten Faserverbundstreifen ausgerichtet. Unter einer unidirektionalen Ausrichtung wird verstanden, dass alle Fasern des jeweiligen Faserverbundstreifens in der Längsrichtung ausgerichtet sind.

Es ist besonders bevorzugt, dass der mindestens eine zweite Faserverbundstreifen Kohlenstoffasern umfassen und/oder die Kohlenstofffasern unidirektional ausgerichtet sind, wobei vorzugsweise alle Kohlenstofffasern des mindestens einen zweiten Faserverbundstreifen parallel zur Längsrichtung des Gurts ausgerichtet sind.

Auch für den mindestens einen zweiten Faserverbundstreifen sind Kohlenstofffasern bevorzugt. Es ist aber auch denkbar, dass alternativ oder ergänzend zu Kohlenstofffasern Glasfasern oder andere Faserarten eingesetzt werden.

Vorzugsweise ist ein Großteil oder sind alle der Fasern des mindestens einen zweiten Faserverbundstreifens in der Längsrichtung des mindestens einen zweiten Faserverbundstreifens ausgerichtet. Unter einer unidirektionalen Ausrichtung wird auch in diesem Zusammenhang verstanden, dass alle Fasern des jeweiligen Faserverbundstreifens in der Längsrichtung ausgerichtet sind.

Es ist besonders bevorzugt, dass der Gurt zwei nebeneinander angeordnete Stapel von Faserverbundstreifen umfasst und in jedem dieser zwei Stapel genau ein zweiter Faserverbundstreifen angeordnet ist, wobei vorzugsweise in jedem dieser zwei Stapel mehrere erste Faserverbundstreifen angeordnet sind.

Es ist besonders bevorzugt, dass der Gurt zwei nebeneinander angeordnete Stapel von Faserverbundstreifen umfasst und in jedem dieser zwei Stapel erste Faserverbundstreifen und zweite Faserverbundstreifen abwechselnd übereinandergestapelt angeordnet sind.

Mittels einer solchen abwechselnden Anordnung kann auf besonders vorteilhafte Weise erreicht werden, dass die Wölbung auf der Gurtaußenseite in Richtung der Gurtinnenseite Lage für Lage ausgeglichen wird. Dadurch wird ein besonders gleichmäßig aufgebauter Gurt bereitgestellt, in dem Spannungsspitzen vermieden werden.

Es ist besonders bevorzugt, dass der Gurt eine Länge von mindestens 10 m, vorzugsweise mindestens 25 m, besonders bevorzugt mindestens 50 m, aufweist.

Insbesondere für moderne, große Rotorblätter von Windenergieanlagen bietet ein solcher Gurt Vorteile. Denn im Pultrusionsverfahren können besonders gut, schnell und günstig bei hoher Qualität mehrere bzw. viele Meter lange Faserverbundstreifen hergestellt werden, die für den Aufbau eines solchen Gurtes verwendet werden können.

Gemäß einem weiteren Aspekt wird die eingangs genannte Aufgabe gelöst durch ein Rotorblatt für eine Windenergieanlage, das Rotorblatt umfassend Rotorblattschalen, die jeweils eine Rotorblattschaleninnenseite und eine Rotorblattschalenaußenseite aufweisen, einen ersten Gurt, vorzugsweise einen wie hier beschriebenen Gurt, umfassend eine Gurtaußenseite des ersten Gurts und eine Gurtinnenseite des ersten Gurts, wobei die Gurtaußenseite des ersten Gurts mit einer der Rotorblattschaleninnenseiten, vorzugsweise mittels einer Klebeverbindung, verbunden ist, einen zweiten Gurt, vorzugsweise einen wie hier beschriebenen Gurt, umfassend eine Gurtaußenseite des zweiten Gurts und eine Gurtinnenseite des zweiten Gurts, wobei die Gurtaußenseite des zweiten Gurts mit einer der Rotorblattschaleninnenseiten, vorzugsweise mit einer anderen der Rotorblattschaleninnenseiten, vorzugsweise mittels einer Klebeverbindung, verbunden ist.

Unter einem Rotorblatt für eine Windenergieanlage ist insbesondere ein Windenergieanlagen-Rotorblatt zu verstehen, also ein Rotorblatt einer Windenergieanlage.

Vorzugsweise umfasst das Rotorblatt mindestens einen Steg, umfassend einen ersten Verbindungsabschnitt und einen zweiten Verbindungsabschnitt, wobei der erste Verbindungsabschnitt des Stegs mit der Gurtinnenseite des ersten Gurts verbunden ist und der zweite Verbindungsabschnitt des Stegs mit der Gurtinnenseite des zweiten Gurts verbunden ist.

Vorzugsweise umfasst das Rotorblatt mindestens zwei Stege, die jeweils mit der Gurtinnenseite des ersten Gurts und mit der Gurtinnenseite des zweiten Gurts verbunden sind.

Gemäß einem weiteren Aspekt wird die eingangs genannte Aufgabe gelöst durch eine Windenergieanlage, umfassend mindestens ein wie hier beschriebenes Rotorblatt für eine Windenergieanlage, vorzugsweise drei wie hier beschriebene Rotorblätter für eine Windenergieanlage.

Gemäß einem weiteren Aspekt wird die eingangs genannte Aufgabe gelöst durch ein Verfahren zum Herstellen eines Gurts, insbesondere für ein Rotorblatt, das Verfahren umfassend: Bereitstellen einer Gurtform mit einer Auflagefläche, wobei die Gurtform eine Längserstreckung und eine Quererstreckung aufweist, wobei die Auflagefläche der Gurtform in Quererstreckung gekrümmt ausgebildet ist; Bereitstellen von pultrudierten ersten Faserverbundstreifen, die jeweils eine Längsrichtung aufweisen, wobei vorzugsweise die ersten Faserverbundstreifen jeweils einen rechteckigen Querschnitt aufweisen; Bereitstellen mindestens eines zweiten Faserverbundstreifens, der eine Längsrichtung aufweist, wobei der mindestens eine zweite Faserverbundstreifen einen nicht-rechteckigen, vorzugsweise einen keilförmigen oder trapezförmigen, Querschnitt aufweist; Anordnen der ersten Faserverbundstreifen und des mindestens einen zweiten Faserverbundstreifens auf der Auflagefläche der Gurtform, sodass jeweils die Längsrichtung der ersten Faserverbundstreifen entlang der Längserstreckung der Gurtform ausgerichtet ist und die Längserstreckung des mindestens einen zweiten Faserverbundstreifens entlang der Längserstreckung der Gurtform ausgerichtet ist, wobei vorzugsweise die Faserverbundstreifen in mindestens zwei nebeneinander auf der Auflagefläche der Gurform angeordneten Stapeln positioniert werden; Verbinden der auf der Auflagefläche der Gurtform angeordneten Faserverbundstreifen, sodass diese einen Gurt, insbesondere für ein Rotorblatt, ausbilden, vorzugsweise mittels Durchführung eines Vakuuminfusionsverfahrens, wobei vorzugsweise der Gurt wie hierin beschrieben ausgebildet ist.

Vorzugsweise entspricht die Längsrichtung der ersten Faserverbundstreifen der Richtung, entlang derer die ersten Faserverbundstreifen in einem Pultrusionsverfahren gezogen wurden.

Vorzugsweise ist der mindestens eine zweite Faserverbundstreifen ein pultrudierter Faserverbundstreifen. Vorzugsweise entspricht die Längsrichtung des mindestens einen zweiten Faserverbundstreifens der Richtung, entlang derer der mindestens eine zweite Faserverbundstreifen in einem Pultrusionsverfahren gezogen wurde.

Unter einer Gurtform ist insbesondere eine Form zu verstehen, die ausgebildet ist, um einen Gurt, insbesondere für ein Rotorblatt, vorzugweise einen wie hier beschriebenen Gurt, herzustellen. Die Gurtform ist vorzugsweise derart gewölbt ausgebildet, sodass der Gurt an seiner Gurtaußenseite nach Herstellung des Gurts eine Krümmung aufweist, die der Krümmung der Rotorblattschale, mit der der Gurt verbunden werden soll, angepasst ist.

Gemäß einem weiteren Aspekt wird die eingangs genannte Aufgabe gelöst durch ein Verfahren zum Herstellen eines Rotorblatts für eine Windenergieanlage, das Verfahren umfassend: Herstellen von Rotorblattschalen die jeweils eine Rotorblattschaleninnenseite und einer Rotorblattschalenaußenseite aufweisen; Herstellen eines ersten Gurts für ein Rotorblatt gemäß dem hier beschriebenen Verfahren zum Herstellen eines Gurts, der erste Gurt umfassend eine Gurtaußenseite des ersten Gurts und eine Gurtinnenseite des ersten Gurts, und Verbinden der Gurtaußenseite des ersten Gurts mit einer der Rotorblattschaleninnenseiten, vorzugsweise mittels einer Klebeverbindung; Herstellen eines zweiten Gurts für ein Rotorblatt gemäß dem hier beschriebenen Verfahren zum Herstellen eines Gurts, der zweite Gurt umfassend eine Gurtaußenseite des zweiten Gurts und eine Gurtinnenseite des zweiten Gurts, und Verbinden der Gurtaußenseite des zweiten Gurts mit einer der Rotorblattschaleninnenseiten, vorzugsweise mittels einer Klebeverbindung, vorzugsweise Bereitstellen mindestens eines Stegs, der mindestens eine Steg umfassend einen ersten Verbindungsabschnitt und einen zweiten Verbindungsabschnitt; vorzugsweise Verbinden des ersten Verbindungsabschnitts des mindestens einen Stegs mit der Gurtinnenseite des ersten Gurts und Verbinden des zweiten Verbindungsabschnitts des mindestens einen Stegs mit der Gurtinnenseite des zweiten Gurts.

Zu den Vorteilen, Ausführungsvarianten und Ausführungsdetails der verschiedenen Aspekte der hier beschriebenen Lösungen und ihrer jeweiligen möglichen Fortbildungen wird auch auf die Beschreibung zu den entsprechenden Merkmalen, Details und Vorteilen der jeweils anderen Aspekte und ihrer Fortbildungen verwiesen.

Bevorzugte Ausführungsbeispiele werden beispielhaft anhand der beiliegenden Figuren erläutert. Die Zeichnungen sind nicht unbedingt maßstabsgetreu. In den Figuren sind gleiche oder im Wesentlichen funktionsgleiche bzw. -ähnliche Elemente mit den gleichen Bezugszeichen bezeichnet. Es zeigen:
- Fig. 1:: eine schematische Darstellung einer Windenergieanlage gemäß der Erfindung:
- Fig. 2A, 2B:: einen schematischen Querschnitt und einen schematischen Längsschnitt eines Rotorblattes gemäß dem Stand der Technik;
- Fig. 3:: einen schematischen Querschnitt eines nicht erfindungsgemäßen Gurts ohne keilförmige oder trapezförmige Faserverbundstreifen, wobei der Gurt in einer Gurtform angeordnet ist;
- Fig. 4:: einen schematischen Querschnitt eines Gurts, der in einer Gurtform angeordnet ist;
- Fig. 5:: einen schematischen Querschnitt eines Gurts, der in einer Gurtform angeordnet ist;
- Fig. 6a-e:: schematische Querschnitte eines keilförmigen Faserverbundstreifens;
- Fig. 7a-e:: schematische Querschnitte eines trapezförmigen Faserverbundstreifens;
- Fig. 8:: einen schematischen Querschnitt eines Rotorblatts mit zwei Gurten;
- Fig. 9a:: ein Flussdiagramm eines Verfahrens zum Herstellen eines Gurts;
- Fig. 9b:: ein Flussdiagramm eines Verfahrens zum Herstellen eines Rotorblatts für eine Windenergieanlage.

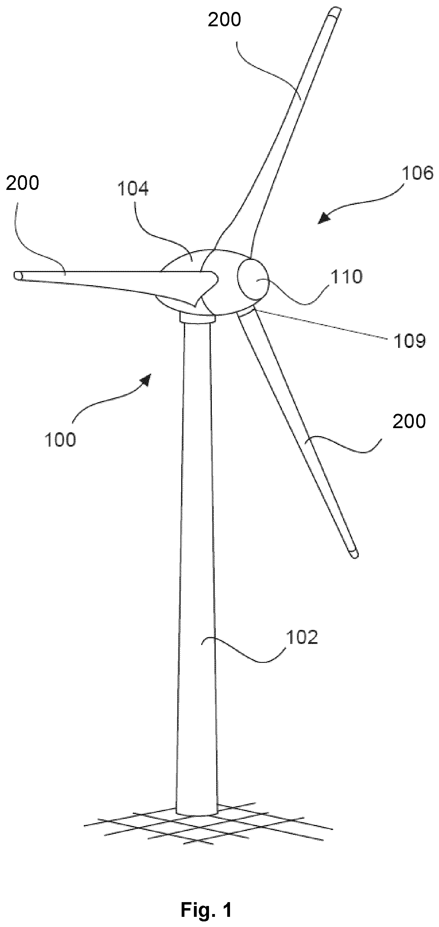

Fig. 1 zeigt eine schematische Darstellung einer Windenergieanlage gemäß der Erfindung Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 200 können durch Pitchmotoren an den Rotorblattwurzeln der jeweiligen Rotorblätter 200 verändert werden.

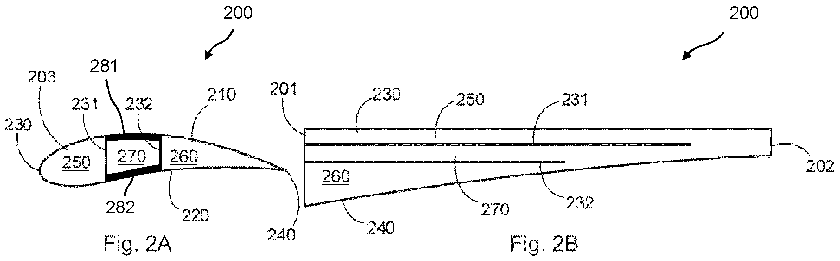

Fig. 2A zeigt einen Querschnitt eines Rotorblattes und Fig. 2B zeigt einen Längsschnitt eines Rotorblattes. Das Rotorblatt 200 weist zwei Rotorblattschalen 210, 220 auf, welche ein Innenvolumen 203 umgeben. Das Rotorblatt 200 weist ferner eine Rotorblattvorderkante 230 und eine Rotorblatthinterkante 240 auf. Zwischen den Rotorblattschalen 210, 220 können Stege 231, 232 vorgesehen sein, so dass das Innenvolumen 203 in verschiedene Abschnitte oder Kanäle 250, 260 und 270 (erster Kanal 250 zwischen Vorderkante 230 und erstem Steg 231, zweiter Kanal 260 zwischen Hinterkante 240 und zweitem Steg 232 und dritter Kanal 270 zwischen erstem und zweitem Steg 231, 232) aufgeteilt werden kann. Der Steg 231 kann beispielsweise länger sein als der Steg 232.

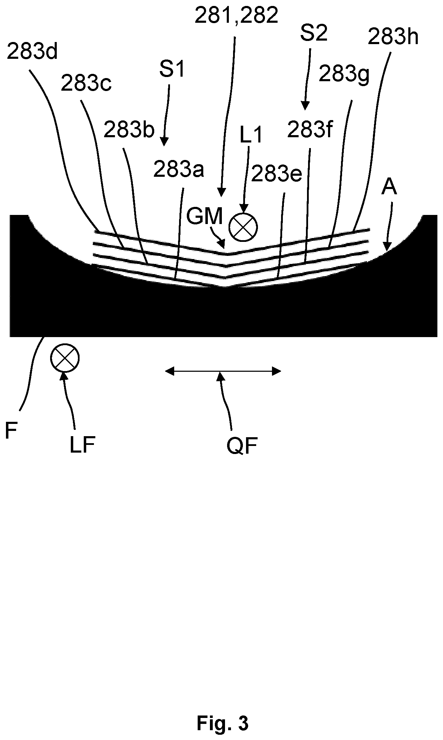

Fig. 3 zeigt einen schematischen Querschnitt eines nicht erfindungsgemäßen Gurts 281, 282, der keinen keilförmigen oder trapezförmigen Faserverbundstreifen aufweist. Der Gurt 281, 282 ist in einer Gurtform F angeordnet. Der Gurt 281, 282 umfasst zwar mehrere pultrudierte erste Faserverbundstreifen 283a-h, die jeweils eine Längsrichtung L1 aufweisen, wobei die Längsrichtungen L1 der ersten Faserverbundstreifen 283a-h parallel zueinander ausgerichtet sind, wobei die ersten Faserverbundstreifen 283a-h jeweils einen rechteckigen Querschnitt aufweisen. Allerdings weist der Gurt 281, 282 keinen keilförmigen oder trapezförmigen Faserverbundstreifen auf. Dies führt zu dem Nachteil, dass der Gurt aufgrund der gewölbten Auflagefläche A der Gurtform F eine V-förmige Kontur ausbildet, wobei die Gurtinnenseite, die von den obenliegenden Faserverbundstreifen 283d, 283h ausgebildet wird, V-förmig, nämlich zur Gurtmitte GM hin abfallend, und somit uneben ausgeformt ist.

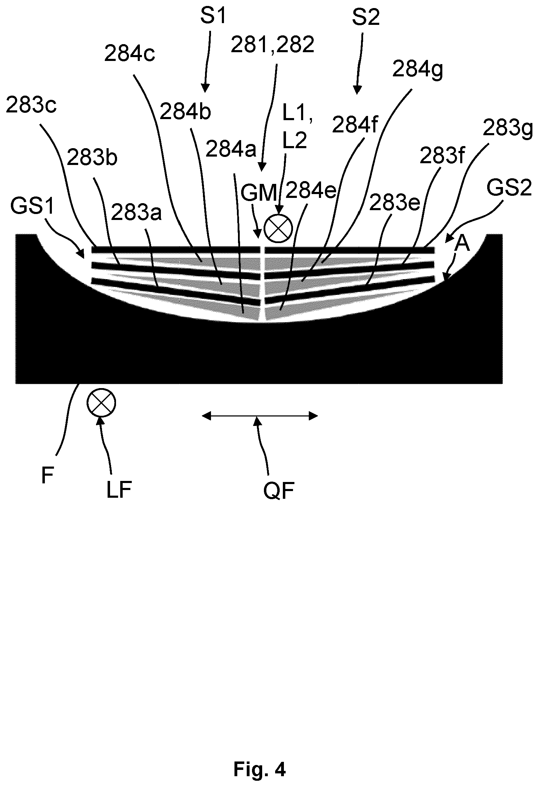

Fig. 4 zeigt einen schematischen Querschnitt eines Gurts 281, 282, der in einer Gurtform F angeordnet ist.

Die Gurtform F weist eine Längserstreckung LF und eine Quererstreckung QF auf, wobei die Auflagefläche A der Gurtform F in Quererstreckung QF gekrümmt ausgebildet ist.

Der Gurt 281, 282 für ein Rotorblatt einer Windenergieanlage umfassend mehrere pultrudierte erste Faserverbundstreifen 283a-g, die jeweils eine Längsrichtung L1 aufweisen. Die Längsrichtungen L1 der ersten Faserverbundstreifen 283a-g sind parallel zueinander ausgerichtet, wobei die ersten Faserverbundstreifen 283a-g jeweils einen rechteckigen Querschnitt aufweisen.

Der Gurt 281 , 282 weist ferner sechs zweite pultrudierte Faserverbundstreifen 284a-g auf, die jeweils eine Längsrichtung L2 aufweisen, die parallel zu den Längsrichtungen L1 der ersten Faserverbundstreifen 283a-g ausgerichtet ist, wobei die sechs zweiten Faserverbundstreifen 284a-g jeweils einen keilförmigen Querschnitt aufweisen. Jeweils zwei der zweiten Faserverbundstreifen 284a-g sind nebeneinander angeordnet.

Die ersten Faserverbundstreifen 283a-g und die zweiten Faserverbundstreifen 284a-g sind in zwei Stapeln S1, S2 nebeneinander angeordnet. Jeder der Stapel S1, S2 weist drei erste Faserverbundstreifen 283a-g und drei zweite Faserverbundstreifen auf 284a-g, die abwechselnd übereinandergestapelt angeordnet sind. Es versteht sich, dass auch eine andere Anzahl von Faserverbundstreifen, insbesondere eine deutlich höhere Anzahl von Faserverbundstreifen verwendet werden kann. Die Stapel S1, S2 sind gleich aufgebaut und spiegelsymmetrisch angeordnet.

Die zweiten Faserverbundstreifen 284a-g sind derart angeordnet, dass die sich die Höhe der zweiten Faserverbundstreifen 284a-g von einer Gurtmitte GM des Gurts 281, 282 zu einer Gurtseite GS1, GS2 des Gurts 281, 282 hin verringert. Die maximale Höhe der zweiten Faserverbundstreifen 284a-g ist im Bereich der Gurtmitte GM des Gurts 281, 282 angeordnet. Die minimale Höhe der zweiten Faserverbundstreifen 284a-g ist im Bereich der Gurtseite GS des Gurts 281, 282 angeordnet.

Die ersten Faserverbundstreifen 283a-g und die zweiten Faserverbundstreifen umfassen jeweils Kohlenstoffasern, die unidirektional, also parallel zur Längsrichtung L1, L2, ausgerichtet sind.

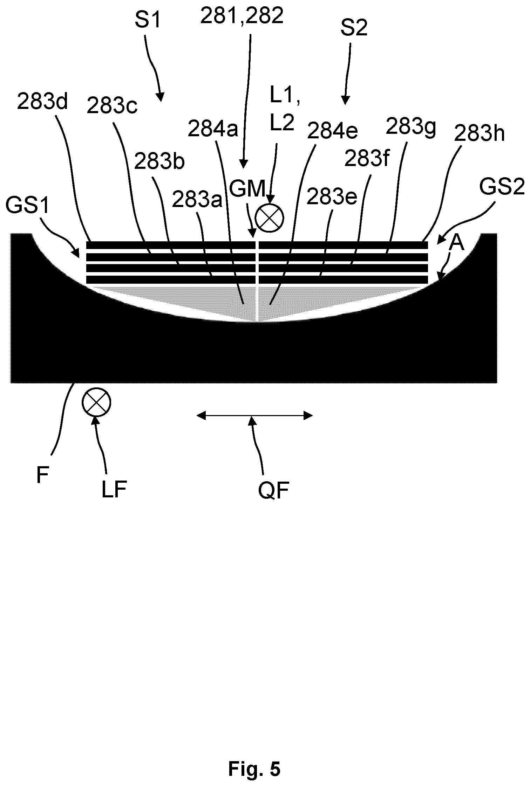

Fig. 5 zeigt einen schematischen Querschnitt eines Gurts 281, 282, der in einer Gurtform F angeordnet ist. Der Aufbau des in Fig. 5 gezeigten Gurts 281, 282 entspricht dem Aufbau des im Zusammenhang mit Fig. 4 beschriebenen Gurts, wobei allerdings im Unterschied zur in Fig. 4 dargestellten Ausführungsform bei der in Fig. 5 dargestellten Ausführungsform nur zwei zweite keilförmige Faserverbundstreifen 284a, 284e vorgesehen sind, die auf der Gurtaußenseite, also bei der Herstellung des Gurts 281, 282 unmittelbar benachbart zur Auflagefläche A der Gurtform F, angeordnet sind. Ansonsten wird auf die Ausführungen zu Fig. 4 verwiesen.

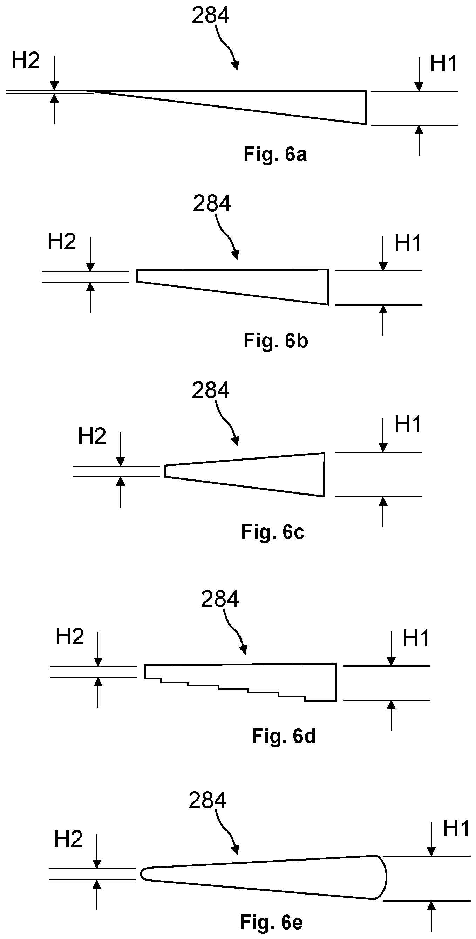

Fig. 6a-e zeigt verschiedene schematische Querschnitte eines zweiten keilförmigen Faserverbundstreifens 284. Der zweite keilförmige Faserverbundstreifen 284, wie in Fig. 4 und Fig. 5 gezeigt, kann unterschiedlich ausgebildet sein. In Fig. 6a-e sind einige beispielhafte mögliche Querschnitte des zweiten keilförmigen Faserverbundstreifens dargestellt.

In Fig. 6a ist der zweite keilförmige Faserverbundstreifen 284 nahezu perfekt keilförmig ausgebildet. Der Faserverbundstreifen 284 weist eine maximale Höhe H1 auf, die im Bereich der Gurtmitte des Gurts angeordnet wird. Der Faserverbundstreifens 284 weist außerdem eine minimale Höhe H2 auf, die im Bereich einer Gurtseite des Gurts angeordnet wird. Die minimale Höhe H2 ist dabei sehr gering, insbesondere um ein Vielfaches kleiner als die maximale Höhe H1.

In Fig. 6b und Fig. 6c ist der jeweils gezeigte zweite keilförmige Faserverbundstreifen 284 keilförmig ausgebildet. Der Faserverbundstreifen 284 weist eine maximale Höhe H1 auf, die im Bereich der Gurtmitte des Gurts angeordnet wird. Der Faserverbundstreifens 284 weist außerdem eine minimale Höhe H2 auf, die im Bereich einer Gurtseite des Gurts angeordnet wird. Die minimale Höhe H2 ist geringer als die maximale Höhe H1. Der Faserverbundstreifen 284 weist im Bereich der minimalen Höhe H2 eine stumpfe Spitze auf.

In Fig. 6d ist der zweite keilförmige Faserverbundstreifen 284 keilförmig ausgebildet. Der Faserverbundstreifen 284 weist eine maximale Höhe H1 auf, die im Bereich der Gurtmitte des Gurts angeordnet wird. Der Faserverbundstreifens 284 weist außerdem eine minimale Höhe H2 auf, die im Bereich einer Gurtseite des Gurts angeordnet wird. Die minimale Höhe H2 ist geringer als die maximale Höhe H1. Der Faserverbundstreifen 284 weist im Bereich der minimalen Höhe H2 eine stumpfe Spitze auf. Außerdem weist der Faserverbundstreifen 284 auf einer Seite mehrere Stufen auf.

In Fig. 6e ist der zweite keilförmige Faserverbundstreifen 284 keilförmig ausgebildet. Der Faserverbundstreifen 284 weist eine maximale Höhe H1 auf, die im Bereich der Gurtmitte des Gurts angeordnet wird. Der Faserverbundstreifens 284 weist außerdem eine minimale Höhe H2 auf, die im Bereich einer Gurtseite des Gurts angeordnet wird. Die minimale Höhe H2 ist geringer als die maximale Höhe H1. Der Faserverbundstreifen 284 weist im Bereich der minimalen Höhe H2 eine abgerundete Spitze auf. Der Faserverbundstreifen 284 weist ferner im Bereich der maximalen Höhe H1 eine abgerundete Spitze auf.

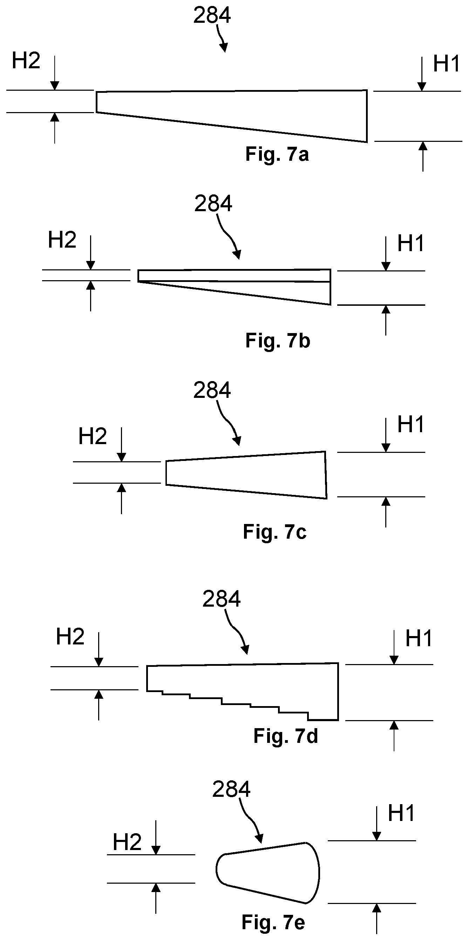

Fig. 7a-e zeigt verschiedene schematische Querschnitte eines zweiten trapezförmigen Faserverbundstreifens 284. Der zweite trapezförmige Faserverbundstreifen 284, wie in Fig. 4 und Fig. 5 gezeigt, kann unterschiedlich ausgebildet sein. In Fig. 7a-e sind einige beispielhafte mögliche Querschnitte des zweiten trapezförmigen Faserverbundstreifens dargestellt.

In Fig. 7a weist der Faserverbundstreifen 284 eine maximale Höhe H1 auf, die im Bereich der Gurtmitte des Gurts angeordnet wird. Der Faserverbundstreifens 284 weist außerdem eine minimale Höhe H2 auf, die im Bereich einer Gurtseite des Gurts angeordnet wird. Die minimale Höhe H2 ist dabei geringer als die maximale Höhe H1. Der in Fig. 7a gezeigte Querschnitt hat die Form eines rechtwinkligen Trapezes. In Fig. 7b ist der trapezförmige Faserverbundstreifen aus einem rechteckigen Abschnitt und einem keilförmigen Abschnitt zu einem trapezförmigen Querschnitt zusammengesetzt. In Fig. 7c zeigt eine weitere mögliche Querschnittsform eines trapezförmigen Faserverbundstreifens. In Fig. 7d weist der zweite trapezförmige Faserverbundstreifen 284 auf einer Seite mehrere Stufen auf. In Fig. 7d zeigt eine weitere mögliche Querschnittsform eines trapezförmigen Faserverbundstreifens mit zwei abgerundeten Seiten.

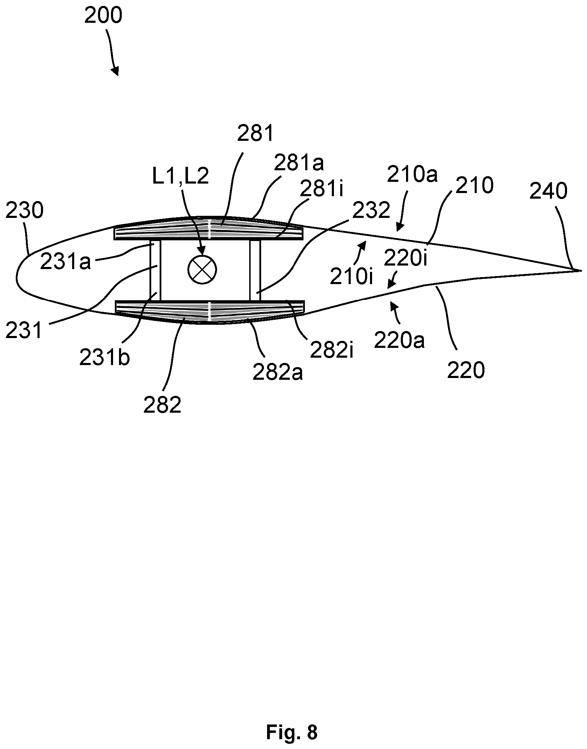

Fig. 8 zeigt einen schematischen Querschnitt eines Rotorblatts 200 mit zwei Gurten 281, 282. Das Rotorblatt 200 weist zwei Rotorblattschalen 210, 220 auf. Das Rotorblatt 200 weist ferner eine Rotorblattvorderkante 230 und eine Rotorblatthinterkante 240 auf. Zwischen den Rotorblattschalen 210, 220 sind Stege 231, 232 vorgesehen.

Die Gurte 281, 282 des Rotorblatts 200 weisen jeweils eine Gurtaußenseite 281a, 282a auf, die mit den Rotorblattschalen 210, 220 verbunden sind. Die Gurtaußenseiten 281a, 282a weisen jeweils eine quer zur Längsrichtung L1, L2 des jeweiligen Gurts 281, 282 gewölbt ausgebildete Außenoberfläche auf. Die Gurtinnenseiten 281i, 282i der Gurte 281, 282 sind eben, also nicht gewölbt, ausgebildet und jeweils mit zwei Stegen 231, 232 verbunden.

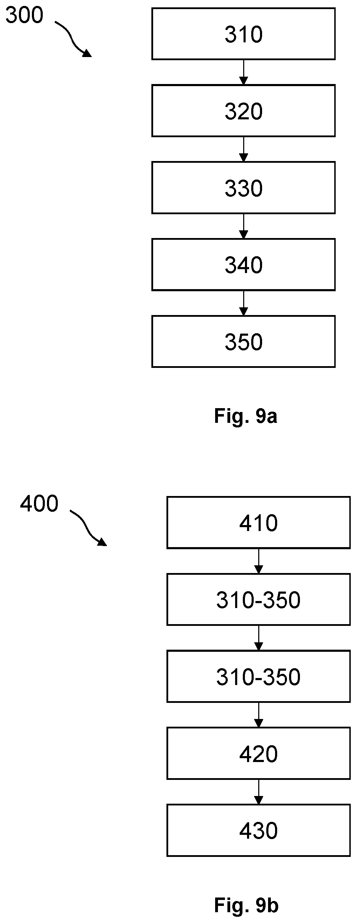

Fig. 9a zeigt ein Flussdiagramm eines Verfahren 300 zum Herstellen eines Gurts 281, 282 für ein Rotorblatt 200 einer Windenergieanlage 100. Das Verfahren 300 umfasst folgende Schritte:
In einem Schritt 310, Bereitstellen einer Gurtform F mit einer Auflagefläche A, wobei die Gurtform F eine Längserstreckung LF und eine Quererstreckung QF aufweist, wobei die Auflagefläche A der Gurtform F in Quererstreckung QF gekrümmt ausgebildet ist.

In einem Schritt 320, Bereitstellen von pultrudierten ersten Faserverbundstreifen 283a-h, die jeweils eine Längsrichtung L1 aufweisen, die der Richtung entspricht, entlang derer die ersten Faserverbundstreifen 283a-h in einem Pultrusionsverfahren gezogen wurden, wobei die ersten Faserverbundstreifen 283a-h jeweils einen rechteckigen Querschnitt aufweisen.

In einem Schritt 330, Bereitstellen mindestens eines zweiten Faserverbundstreifens 284ag, der eine Längsrichtung L2 aufweist, wobei der mindestens eine zweite Faserverbundstreifen 284a-g einen nicht-rechteckigen, nämlich keilförmigen oder trapezförmigen, Querschnitt aufweist.

In einem Schritt 340, Anordnen der ersten Faserverbundstreifen 283a-h und des mindestens einen zweiten Faserverbundsteifens 284a-g auf der Auflagefläche A der Gurtform F, sodass jeweils die Längsrichtung L1 der ersten Faserverbundstreifen 283a-h entlang der Längserstreckung LF der Gurtform F ausgerichtet ist und die Längserstreckung L2 des mindestens einen zweiten Faserverbundstreifens 284a-g entlang der Längserstreckung LF der Gurtform F ausgerichtet ist, wobei die Faserverbundstreifen 283, 284 in mindestens zwei nebeneinander auf der Auflagefläche A der Gurform F angeordneten Stapeln S1, S2 positioniert werden.

In einem Schritt 350, Verbinden der auf der Auflagefläche A der Gurtform F angeordneten Faserverbundstreifen 283, 284, sodass diese einen Gurt 281, 282 für ein Rotorblatt 200 ausbilden, mittels Durchführung eines Vakuuminfusionsverfahrens.

Fig. 9b zeigt ein Flussdiagramm eines Verfahrens 400 zum Herstellen eines Rotorblatts 200 für eine Windenergieanlage 100. Das Verfahren 400 umfasst folgende Schritte:
In einem Schritt 410, Herstellen von Rotorblattschalen 210, 220 die jeweils eine Rotorblattschaleninnenseite 210i, 220i und eine Rotorblattschalenaußenseite 210a, 220a aufweisen.

In den Schritten 310-350, Herstellen eines ersten Gurts 281 für ein Rotorblatt 200 wie im Zusammenhang mit Fig. 8a beschrieben, wobei der erste Gurt 281 eine Gurtaußenseite 281a des ersten Gurts 281 und eine Gurtinnenseite 281i des ersten Gurts 281 umfasst und die Gurtaußenseite 281a des ersten Gurts 281 mit einer der Rotorblattschaleninnenseiten 210i, vorzugsweise mittels einer Klebeverbindung, verbunden wird.

In den Schritten 310-350, Herstellen eines zweiten Gurts 282 für ein Rotorblatt 200 wie im Zusammenhang mit Fig. 8a beschrieben, wobei der zweite Gurt 282 eine Gurtaußenseite 282a des zweiten Gurts 282 und eine Gurtinnenseite 282i des zweiten Gurts 282 umfasst die Gurtaußenseite 282a des zweiten Gurts 282 mit einer der Rotorblattschaleninnenseiten 220i, vorzugsweise mittels einer Klebeverbindung, verbunden wird.

In einem Schritt 420, Bereitstellen mindestens eines Stegs 231, 232, der mindestens eine Steg 231, 232 umfassend einen ersten Verbindungsabschnitt 231a und einen zweiten Verbindungsabschnitt 231b.

In einem Schritt 430, Verbinden des ersten Verbindungsabschnitts 231a des mindestens einen Stegs 231, 232 mit der Gurtinnenseite 281i des ersten Gurts 281 und Verbinden des zweiten Verbindungsabschnitts 231b des mindestens einen Stegs 231, 232 mit der Gurtinnenseite 282i des zweiten Gurts 282.

### Bezugszeichenliste

- 100: Windenergieanlage
- 102: Turm
- 104: Gondel
- 106: Rotor
- 110: Spinner
- 200: Rotorblätter
- 203: Innenvolumen des Rotorblatts
- 210, 220: Rotorblattschalen
- 210a: Rotorblattschalenaußenseite
- 210i: Rotorblattschaleninnenseite
- 220a: Rotorblattschalenaußenseite
- 220i: Rotorblattschaleninnenseite
- 230: Rotorblattvorderkante
- 231: erster Steg
- 231a: Verbindungsabschnitt des ersten Stegs
- 231b: Verbindungsabschnitt des ersten Stegs
- 232: zweiter Steg
- 240: Rotorblatthinterkante
- 250, 260, 270: Kanäle
- 281: erster Gurt
- 281a: Gurtaußenseite des ersten Gurts
- 281i: Gurtinnenseite des ersten Gurts
- 282: zweiter Gurt
- 282a: Gurtaußenseite des zweiten Gurts
- 282i: Gurtinnenseiten des zweiten Gurts
- 283, 283a-h: erste Faserverbundstreifen
- 284, 284a-f: zweite Faserverbundstreifen
- 300: Verfahren zum Herstellen eines Gurts
- 310-350: Verfahrensschritte
- 400: Verfahren zum Herstellen eines Rotorblatts
- 410-430: Verfahrensschritte
- A: Auflagefläche der Gurtform
- F: Gurtform
- GM: Gurtmitte
- GS1, GS2: Gurtseiten
- LF: Längserstreckung der Gurtform
- QF: Quererstreckung der Gurtform
- H1: maximale Höhe des zweiten Faserverbundstreifens
- H2: minimale Höhe des zweiten Faserverbundstreifens
- L1: Längsrichtung der ersten Faserverbundstreifen
- L2: Längsrichtung der zweiten Faserverbundstreifen
- S1, S2: Stapel

## Patentansprüche

1. Gurt (281, 282), insbesondere für ein Rotorblatt (200) einer Windenergieanlage (100), der Gurt (281, 282) umfassend
- mehrere pultrudierte erste Faserverbundstreifen (283a-h), die jeweils eine Längsrichtung (L1) aufweisen, wobei die Längsrichtungen (L1) der ersten Faserverbundstreifen (283a-h) parallel zueinander ausgerichtet sind, wobei die ersten Faserverbundstreifen (283a-h) jeweils einen rechteckigen Querschnitt aufweisen, und
- mindestens einen zweiten Faserverbundstreifen (284a-g), der eine Längsrichtung (L2) aufweist, die parallel zu den Längsrichtungen (L1) der ersten Faserverbundstreifen (283a-h) ausgerichtet ist, **dadurch gekennzeichnet, dass** der mindestens eine zweite Faserverbundstreifen (284a-g) einen nicht-rechteckigen keilförmigen oder trapezförmigen Querschnitt aufweist.

2. Gurt nach dem vorhergehenden Anspruch,
wobei der Gurt (281, 282) mindestens zwei zweite Faserverbundstreifen (284a-g) umfasst, die jeweils einen nicht-rechteckigen keilförmigen oder trapezförmigen Querschnitt aufweisen und die jeweils eine Längsrichtung (L2) aufweisen, die parallel zu den Längsrichtungen (L1) der ersten Faserverbundstreifen (283a-h) ausgerichtet sind,
wobei vorzugsweise zwei der mindestens zwei zweiten Faserverbundstreifen (284a-g) nebeneinander angeordnet sind.

3. Gurt nach einem der vorhergehenden Ansprüche,
wobei der mindestens eine zweite Faserverbundstreifen (284a-g) ein pultrudierter Faserverbundstreifen oder ein in einem Vakuuminfusionsverfahren hergestellter Faserverbundstreifen ist.

4. Gurt nach einem der vorhergehenden Ansprüche,
wobei der mindestens eine zweite Faserverbundstreifen (284a-g) derart angeordnet ist, dass sich die Höhe des mindestens einen zweiten Faserverbundstreifens (284a-g) von einer Gurtmitte (GM) des Gurts (281, 282) zu einer Gurtseite (GS1, GS2) des Gurts (281, 282) hin verringert, wobei vorzugsweise die maximale Höhe (H1) des mindestens einen zweiten Faserverbundstreifens (284a-g) im Bereich der Gurtmitte (GM) des Gurts (281, 282) angeordnet ist und/oder wobei vorzugsweise die minimale Höhe (H2) des mindestens einen zweiten Faserverbundstreifens (284a-g) im Bereich der Gurtseite (GS) des Gurts (281, 282) angeordnet ist.

5. Gurt nach einem der vorhergehenden Ansprüche, umfassend
- eine Gurtaußenseite (281a, 282a), die ausgebildet ist, um mit einer Rotorblattschale (210, 220) verbunden zu werden,
wobei die Gurtaußenseite (281a, 282a) eine gewölbt ausgebildete Außenoberfläche, insbesondere quer zur Längsrichtung des Gurts gewölbt ausgebildete Außenoberfläche, aufweist.

6. Gurt nach einem der vorhergehenden Ansprüche, umfassend
- eine Gurtinnenseite (281i, 282i), die ausgebildet ist, um mit mindestens einem Steg (231, 232) verbunden zu werden,
wobei die Gurtinnenseite (281i, 282i) eine ebene, und insbesondere nicht gewölbte, Außenoberfläche, insbesondere quer zur Längsrichtung des Gurts eben ausgebildete Außenoberfläche, aufweist.

7. Gurt nach einem der vorhergehenden Ansprüche,
wobei die Faserverbundstreifen, umfassend die ersten Faserverbundstreifen (283a-h) und den mindestens einen zweiten Faserverbundstreifen (284a-g), in mindestens zwei Stapeln (S1, S2) nebeneinander angeordnet sind,
wobei vorzugsweise jeder der Stapel (S1, S2) mindestens einen zweiten Faserverbundstreifen (284a-g) aufweist, wobei besonders bevorzugt die zweiten Faserverbundstreifen (284a-g) bezogen auf die Höhe der Stapel in gleicher Höhe angeordnet sind und/oder spiegelsymmetrisch zueinander angeordnet sind.

8. Gurt nach einem der vorhergehenden Ansprüche,
wobei die ersten Faserverbundstreifen (283a-h) Kohlenstoffasern umfassen und/oder die Kohlenstofffasern unidirektional ausgerichtet sind, wobei vorzugsweise alle Kohlenstofffasern der ersten Faserverbundstreifen parallel zur Längsrichtung des Gurts ausgerichtet sind, und/oder
wobei der mindestens eine zweite Faserverbundstreifen (284a-g) Kohlenstoffasern umfassen und/oder die Kohlenstofffasern unidirektional ausgerichtet sind, wobei vorzugsweise alle Kohlenstofffasern des mindestens einen zweiten Faserverbundstreifen parallel zur Längsrichtung des Gurts ausgerichtet sind.

9. Gurt nach einem der vorhergehenden Ansprüche,
wobei der Gurt (281, 282) zwei nebeneinander angeordnete Stapel (S1, S2) von Faserverbundstreifen umfasst und in jedem dieser zwei Stapel (S1, S2) genau ein zweiter Faserverbundstreifen (284a-g) angeordnet ist, wobei vorzugsweise in jedem dieser zwei Stapel (S1, S2) mehrere erste Faserverbundstreifen (283a-h) angeordnet sind.

10. Gurt nach einem der vorhergehenden Ansprüche,
wobei der Gurt (281, 282) zwei nebeneinander angeordnete Stapel (S1, S2) von Faserverbundstreifen umfasst und in jedem dieser zwei Stapel (S1, S2) erste Faserverbundstreifen (283a-h) und zweite Faserverbundstreifen (284a-g) abwechselnd übereinandergestapelt angeordnet sind.

11. Gurt nach einem der vorhergehenden Ansprüche,
wobei der Gurt (281, 282) eine Länge von mindestens 10 m, vorzugsweise mindestens 25 m, besonders bevorzugt mindestens 50 m, aufweist.

12. Rotorblatt (200) für eine Windenergieanlage (100), das Rotorblatt (200) umfassend
- Rotorblattschalen (210, 220), die jeweils eine Rotorblattschaleninnenseite (210i, 220i) und einer Rotorblattschalenaußenseite (210a, 220a) aufweisen,
- einen ersten Gurt (281), vorzugsweise einen Gurt nach einem der vorhergehenden Ansprüche, umfassend eine Gurtaußenseite (281a) des ersten Gurts (281) und eine Gurtinnenseite (281i) des ersten Gurts (281), wobei die Gurtaußenseite (281a) des ersten Gurts (281) mit einer der Rotorblattschaleninnenseiten (210i), vorzugsweise mittels einer Klebeverbindung, verbunden ist,
- einen zweiten Gurt (282), vorzugsweise einen Gurt nach einem der vorhergehenden Ansprüche, umfassend eine Gurtaußenseite (282a) des zweiten Gurts (282) und eine Gurtinnenseite (282i) des zweiten Gurts (282), wobei die Gurtaußenseite (282a) des zweiten Gurts (282) mit einer der Rotorblattschaleninnenseiten (220i), vorzugsweise mit einer anderen der Rotorblattschaleninnenseiten (220i), vorzugsweise mittels einer Klebeverbindung, verbunden ist,
- und vorzugsweise mindestens einen Steg (231, 232), umfassend einen ersten Verbindungsabschnitt (231a) und einen zweiten Verbindungsabschnitt (231b), wobei der erste Verbindungsabschnitt (231a) des Stegs (231, 232) mit der Gurtinnenseite (281i) des ersten Gurts (281) verbunden ist und der zweite Verbindungsabschnitt (231b) des Stegs (231, 232) mit der Gurtinnenseite (282i) des zweiten Gurts (282) verbunden ist.

13. Windenergieanlage (100), umfassend mindestens ein Rotorblatt (200) für eine Windenergieanlage nach dem vorhergehenden Anspruch, vorzugsweise drei Rotorblätter (200) für eine Windenergieanlage nach dem vorhergehenden Anspruch.

14. Verfahren (300) zum Herstellen eines Gurts (281, 282), insbesondere für ein Rotorblatt (200), das Verfahren umfassend:
- Bereitstellen (310) einer Gurtform (F) mit einer Auflagefläche (A), wobei die Gurtform (F) eine Längserstreckung (LF) und eine Quererstreckung (QF) aufweist, wobei die Auflagefläche (A) der Gurtform (F) in Quererstreckung (QF) gekrümmt ausgebildet ist;
- Bereitstellen (320) von pultrudierten ersten Faserverbundstreifen (283a-h), die jeweils eine Längsrichtung (L1) aufweisen, die der Richtung entspricht, entlang derer die ersten Faserverbundstreifen (283a-h) in einem Pultrusionsverfahren gezogen wurden, wobei vorzugsweise die ersten Faserverbundstreifen (283a-h) jeweils einen rechteckigen Querschnitt aufweisen;
- Bereitstellen (330) mindestens eines zweiten Faserverbundstreifens (284a-g), der eine Längsrichtung (L2) aufweist, wobei der mindestens eine zweite Faserverbundstreifen (284a-g) einen nicht-rechteckigen, vorzugsweise einen keilförmigen oder trapezförmigen, Querschnitt aufweist;
- Anordnen (340) der ersten Faserverbundstreifen (283a-h) und des mindestens einen zweiten Faserverbundsteifens (284a-g) auf der Auflagefläche (A) der Gurtform (F), sodass jeweils die Längsrichtung (L1) der ersten Faserverbundstreifen (283a-h) entlang der Längserstreckung (LF) der Gurtform (F) ausgerichtet ist und die Längserstreckung (L2) des mindestens einen zweiten Faserverbundstreifens (284a-g) entlang der Längserstreckung (LF) der Gurtform (F) ausgerichtet ist, wobei vorzugsweise die Faserverbundstreifen (283, 284) in mindestens zwei nebeneinander auf der Auflagefläche (A) der Gurform (F) angeordneten Stapeln (S1, S2) positioniert werden;
- Verbinden (350) der auf der Auflagefläche (A) der Gurtform (F) angeordneten Faserverbundstreifen (283, 284), sodass diese einen Gurt (281, 282), insbesondere für ein Rotorblatt (200), ausbilden, vorzugsweise mittels Durchführung eines Vakuuminfusionsverfahrens, wobei vorzugsweise der Gurt (281, 282) ausgebildet ist gemäß einem der Ansprüche 1-11.

15. Verfahren (400) zum Herstellen eines Rotorblatts (200) für eine Windenergieanlage (100), das Verfahren (400) umfassend:
- Herstellen (410) von Rotorblattschalen (210, 220) die jeweils eine Rotorblattschaleninnenseite (210i, 220i) und eine Rotorblattschalenaußenseite (210a, 220a) aufweisen;
- Herstellen (310-350) eines ersten Gurts (281) für ein Rotorblatt (200) gemäß dem Verfahren zum Herstellen eines Gurts nach Anspruch 14, der erste Gurt (281) umfassend eine Gurtaußenseite (281a) des ersten Gurts (281) und eine Gurtinnenseite (281i) des ersten Gurts (281), und Verbinden der Gurtaußenseite (281a) des ersten Gurts (281) mit einer der Rotorblattschaleninnenseiten (210i), vorzugsweise mittels einer Klebeverbindung;
- Herstellen (310-350) eines zweiten Gurts (282) für ein Rotorblatt (200) gemäß dem Verfahren zum Herstellen eines Gurts nach Anspruch 14, der zweite Gurt (282) umfassend eine Gurtaußenseite (282a) des zweiten Gurts (282) und eine Gurtinnenseite (282i) des zweiten Gurts (282), und Verbinden der Gurtaußenseite (282a) des zweiten Gurts (282) mit einer der Rotorblattschaleninnenseiten (220i), vorzugsweise mittels einer Klebeverbindung,
- vorzugsweise Bereitstellen (420) mindestens eines Stegs (231, 232), der mindestens eine Steg (231, 232) umfassend einen ersten Verbindungsabschnitt (231a) und einen zweiten Verbindungsabschnitt (231b);
- vorzugsweise Verbinden (430) des ersten Verbindungsabschnitts (231a) des mindestens einen Stegs (231, 232) mit der Gurtinnenseite (281i) des ersten Gurts (281) und Verbinden des zweiten Verbindungsabschnitts (231b) des mindestens einen Stegs (231, 232) mit der Gurtinnenseite (282i) des zweiten Gurts (282).
